# EUROPÄISCHE PATENTANMELDUNG

(11) **EP 3 796 279 A1**
(43) Veröffentlichungstag der Anmeldung: **24.03.2021**
(21) Anmeldenummer: 20196442.6
(22) Anmeldetag: 16.09.2020
(51) Int. Cl.: G08B 3/10, G08B 21/18, G08G 5/00, G01S 13/88

(54) **VERFAHREN ZUR ÜBERWACHUNG VON FUNKTIONEN EINES SYSTEMS UND SONIFIKATIONSMODUL**

(30) Priorität: 23.09.2019 DE 102019006676
(71) Anmelder: MBDA Deutschland GmbH, 86529 Schrobenhausen (DE)
(72) Erfinder: Lamac, Klaus, 80993 München (DE); Mamier, Lothar, 82281 Egenhofen (DE)
(74) Vertreter: Isarpatent

(57) **Zusammenfassung**

Ein Verfahren zur Überwachung von Funktionen eines Systems umfasst ein Ermitteln von Funktionsinformationen für zumindest eine Funktion des Systems für einen aktuellen Zeitschritt, wobei die Funktionsinformationen eine oder mehrere der folgenden Informationen beinhalten: einen Ausführungsstatus der Funktion, eine Funktionsressourcenkennzahl, welche eine Auslastung einer vom System bereitgestellten Ressource durch die jeweilige Funktion repräsentiert, eine Systemressourcenkennzahl, welche einen Anteil der Funktion an der Auslastung des Systems repräsentiert, ein Erzeugen eines Systemzustandsdatensatzes für den jeweiligen Zeitschritt, welcher die Funktionsinformationen der zumindest einen Funktion als Dateninhalte aufweist, ein Ermitteln akustischer Parameter gemäß einer vorbestimmten Zuordnung von akustischen Parametern zu den Dateninhalten des Systemzustandsdatensatzes und ein Erzeugen eines die akustischen Parameter repräsentierenden Audiosignals für den jeweiligen Zeitschritt.

## Beschreibung

Die vorliegende Erfindung betrifft ein Verfahren zur Überwachung von Funktionen eines Systems und ein Sonifikationsmodul.

Zivile und militärische Systeme, wie z. B. Radarsysteme, Kommunikationssysteme, Waffensysteme, Fahrzeuge etc. werden zunehmend komplexer. Beispielsweise weist ein Fahrzeug, wie z. B. ein Luftfahrzeug oder ein militärisches Einsatzfahrzeug eine hohe Anzahl an Subsystemen auf, wie z. B. ein Antriebssystem zum Antrieb des Fahrzeugs, ein Kommunikationssystem zum Kommunizieren mit anderen Kommunikationsteilnehmern, ein Navigationssystem, gegebenenfalls ein Waffensystem und dergleichen. Ähnliche Situationen treten beispielsweise in Kraftwerken, bei der Luftraumüberwachung, in Kommunikations- oder Datennetzwerken und ähnlichen Systemen auf. Derartige Systeme sind in der Lage, eine Vielzahl verschiedener Funktionen gleichzeitig oder nacheinander auszuführen und weisen typischerweise einen hohen Vernetzungsgrad auf.

Um einen effizienten und zuverlässigen Betrieb komplexer Systeme sicherzustellen, findet in der Regel eine Überwachung der Funktionen des Systems statt. Beispielsweise kann überwacht werden, ob bestimmte Systemfunktionen überhaupt ausgeführt werden und wie bestimmte Ressourcen des Systems durch die jeweilige Funktion ausgelastet werden. Um dem Bedienpersonal bzw. dem Überwachungspersonal die Überwachung der Systemfunktionen zu vereinfachen, werden Funktionsinformationen des Systems in Datensätze umgewandelt, welche typischerweise an graphischen Benutzerschnittstellen wie Bildschirmen als visuelle Darstellung ausgegeben werden. Gelegentlich werden solche visuellen Darstellungen durch akustische Signale in Form von Alarmen ergänzt, wobei ein Warnsignal erzeugt wird, wenn ein Ausfall einer Funktion oder eine Überlastung einer Systemressource durch eine Funktion festgestellt wird.

Die Überwachung der Funktionen eines Systems stellt für das Bedienpersonal eine herausfordernde Aufgabe dar. Insbesondere die gleichzeitige Erfassung verschiedener Informationen aus einer visuellen Darstellung erfordert eine hohe Konzentrationsleistung.

Vor diesem Hintergrund beschreibt die US 2017/0330427 A1 ein Verfahren zur akustischen Darstellung eines Systemstatus, wobei verschiedene Systemzustände eines Systems ermittelt und daraus ein repräsentativer Systemstatus erzeugt wird, welcher mittels eines Wandlermoduls in eine musikalische Wiedergabe umgewandelt wird. Hierbei wird binär zwischen einem "akzeptablen" und einem "inakzeptablen" Systemzustand unterschieden, indem diese Zustände als konsonanter oder dissonanter Klang akustisch ausgegeben werden.

Es ist Aufgabe der vorliegenden Erfindung, verbesserte Lösungen zur Überwachung von Funktionen eines Systems zu finden.

Diese Aufgabe wird jeweils durch die Gegenstände der unabhängigen Ansprüche gelöst.

Gemäß einem ersten Aspekt der Erfindung umfasst ein Verfahren zur Überwachung von Funktionen eines Systems ein Ermitteln von Funktionsinformationen für zumindest eine Funktion des Systems für einen aktuellen Zeitschritt, wobei die Funktionsinformationen eine oder mehrere der folgenden Informationen beinhalten: einen Ausführungsstatus der Funktion, eine Funktionsressourcenkennzahl, welche eine Auslastung einer vom System bereitgestellten Ressource durch die jeweilige Funktion repräsentiert, eine Systemressourcenkennzahl, welche einen Anteil der Funktion an der Auslastung des Systems repräsentiert. In diesem Schritt werden somit Daten des Systems erfasst, welche einen Zustand einer jeweiligen Funktion des Systems beschreiben. Die Funktion kann hierbei durch eine physische Komponente des Systems ausgeführt werden. Insbesondere kann diese Komponente eine oder mehrere Funktionen ausführen und hierfür entsprechende Ressourcen, z. B. in Form elektrischer Leistung, Rechenleistung, etc. bereitstellen. Die Funktionsinformationen repräsentieren, wie beschrieben, ob eine Funktion überhaupt ausgeführt wird und/oder welche Ressourcen die Funktion bei der Ausführung aktuell benötigt. In Bezug auf die Ressourcen, welche die Funktion bei der Ausführung aktuell benötigt, kann beispielsweise erfasst werden, zu welchem Prozentsatz die Funktion die ihr von der ausführenden Komponente zur Verfügung gestellten Ressourcen ausnutzt, was einer Funktionsressourcenkennzahl entspricht. Alternativ oder zusätzlich kann erfasst werden, welchen Anteil die Ausführung der jeweiligen Funktion an durch die ausführende Komponente oder das System insgesamt bereitgestellten Ressourcen im Vergleich zu anderen Funktionen beansprucht. Dieser Anteil entspricht einer Systemressourcenkennzahl.

In einem weiteren Schritt des Verfahrens erfolgt ein Erzeugen eines Systemzustandsdatensatzes für den jeweiligen Zeitschritt, welcher die Funktionsinformationen der zumindest einen Funktion als Dateninhalte aufweist. Weiterhin erfolgen ein Ermitteln akustischer Parameter gemäß einer vorbestimmten Zuordnung von akustischen Parametern zu den Dateninhalten des Systemzustandsdatensatzes und ein Erzeugen eines die akustischen Parameter repräsentierenden Audiosignals für jeden Zeitschritt.

Gemäß einem zweiten Aspekt der Erfindung ist ein Überwachungssystem zur Überwachung von Funktionen eines Systems vorgesehen. Das erfindungsgemäße Überwachungssystem weist ein Überwachungsmodul mit einer Systemschnittstelle zum Anschluss an das zu überwachende System auf, wobei das Überwachungsmodul dazu eingerichtet ist, für einen aktuellen Zeitschritt Funktionsinformationen für zumindest eine Funktion des Systems zu ermitteln und einen Systemzustandsdatensatz zu erzeugen, welcher die Funktionsinformationen für zumindest eine Funktion des Systems zu einem jeweiligen Zeitschritt enthält, wobei die Funktionsinformationen eine oder mehrere der folgenden Informationen beinhalten: einen Ausführungsstatus der Funktion, eine Funktionsressourcenkennzahl, welche eine Auslastung einer vom System bereitgestellten Ressource durch die jeweilige Funktion repräsentiert, eine Systemressourcenkennzahl, welche einen Anteil der Funktion an der Auslastung des Systems repräsentiert.

Das Überwachungssystem umfasst ferner ein Sonifikationsmodul mit einer mit dem Überwachungsmodul verbundenen Eingangsschnittstelle zum Empfang des Systemzustandsdatensatzes, mit einer Ausgangsschnittstelle und mit einer Verarbeitungseinheit, welche dazu eingerichtet ist, akustische Parameter gemäß einer vorbestimmten Zuordnung von akustischen Parametern zu den Dateninhalten des Systemzustandsdatensatzes zu ermitteln, ein die akustischen Parameter repräsentierendes Audiosignal zu erzeugen und an der Ausgangsschnittstelle auszugeben.

Das Überwachungssystem ist somit insbesondere zur Ausführung des Verfahrens gemäß dem ersten Aspekt der Erfindung eingerichtet. Die für das Verfahren offenbarten Merkmale und Vorteile gelten somit auch für das Überwachungssystem als offenbart und umgekehrt.

Eine der Erfindung zugrundeliegende Idee ist es, die Funktionen eines Systems kontinuierlich zu überwachen und die Kennzahlen, die einen Status der Funktion beschreiben, in ein Audiosignal umzuwandeln und somit zu sonifizieren. Dadurch können die Informationen bzw. Datenbeziehungen des Systemzustandsdatensatzes in wahrnehmbare Beziehungen in einem akustischen Signal umgewandelt werden. Insbesondere wird für jeden Zeitschritt ein Systemzustandsdatensatz erzeugt, in welchem für die überwachten Funktionen jeweils die Funktionsressourcenkennzahl und/oder die Systemressourcenkennzahl und/oder der Ausführungsstatus der Funktion enthalten ist. Diese als Inhalt in dem Datensatz enthaltenen Informationen werden gemäß einer vorbestimmten Zuordnung akustischen Parametern zugeordnet. Anhand des Inhalts des Systemzustandsdatensatzes, also z. B. anhand einer darin enthaltenen Funktionsressourcenkennzahl, wird gemäß einem vorbestimmten Algorithmus bzw. einer vorbestimmten Zuordnung ein Satz akustischer Parameter, wie z. B. Tonhöhe, Klangfarbe, Rhythmus, Lautstärke, Akkord, Modulation, Staccato u. ä. ermittelt und ein diese ermittelten Parameter repräsentierendes elektrisches oder elektromagnetisches Signal erzeugt, welches mittels eines elektroakustischen Wandlers in ein durch einen menschlichen Benutzer wahrnehmbares Signal umwandelbar ist. Insbesondere erfolgt durch die Sonifikation der im Systemzustandsdatensatz enthaltenen Kennzahlen für jeweils einen aktuellen Zeitschritt bei einer kontinuierlichen bzw. iterativen Ausführung des Verfahrens eine kontinuierliche klangliche Darstellung der Entwicklung der Kennzahlen.

Einer der Vorteile der Erfindung ist es, dass die Fähigkeiten des menschlichen Gehörs in die Systemüberwachung eingebunden werden. Durch die Sonifikation der im Systemzustandsdatensatz enthaltenen Kennzahlen wird das Überwachungspersonal in die Lage versetzt, Änderungen, z. B. eine Änderung eines Ausführungsstatus einer Funktion, wahrzunehmen, ohne hierfür ausschließlich auf eine visuelle Darstellung angewiesen zu sein. Ferner wird die Fähigkeit des menschlichen Gehörs vorteilhaft ausgenutzt, bereits minimale Änderungen bzw. Unterschiede in Klängen wahrzunehmen. Damit wird es dem Bediener oder Benutzer erleichtert, auch bei einer sehr großen Anzahl an überwachten Funktionen auf einfache Weise den Überblick zu behalten. Eine Parallelisierung der Überwachung mit anderen Aufgaben wird damit ebenfalls erleichtert. Da bei menschlichen Benutzern Hören praktisch "nebenbei" erfolgt, wird es dem Benutzer erheblich erleichtert, eine Situation zu erfassen.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform des Verfahrens kann das System eine oder mehrere der folgenden Systemkomponenten aufweisen, welche jeweils eine oder mehrere Funktionen ausführen: ein Sensor, welcher eine physikalische Größe misst, ein Transceiver, welcher elektrische, optische oder elektromagnetische Signale sendet und empfängt, ein Aktuator, welcher eine weitere Komponente des Systems oder ein Arbeitsmedium, z. B. ein Fluid oder Schüttgut, mechanisch mit einer Kraft beaufschlagt, z. B. ein Ventil oder eine Pumpe, ein Datennetzwerk, welches Daten zwischen verschiedenen Komponenten des Systems überträgt, ein Prozessor, welcher eingehende elektrische Signale verarbeitet und verarbeitete Signale als Ausgabewerte ausgibt.

Gemäß einer weiteren Ausführungsform des Verfahrens kann das System ein Radarsystem aufweisen, welches innerhalb eines vorbestimmten Zeitfensters, beispielsweise nacheinander, eine oder mehrere der folgenden Funktionen ausführt: eine Basissuche zur Detektion neuer Objekte, Grobsuche zur Klassifizierung von Objekten, eine Feinsuche zur Erkennung von Objekten in einem vorbestimmten räumlichen Bereich, eine Zielverfolgung eines erkannten Objekts, wobei als Funktionsinformationen für jede der Funktionen der Ausführungsstatus und/oder die Systemressourcenkennzahl ermittelt werden, und wobei die Systemressourcenkennzahl durch einen Zeitanteil an dem Zeitfenster definiert ist, für welchen die jeweilige Funktion während des Zeitfensters ausgeführt wird. Das Radarsystem erzeugt innerhalb eines Zeitfensters eine bestimmte Anzahl an gerichteten, elektromagnetischen Radarstrahlen, wobei mit dieser Anzahl an Strahlen ein bestimmter Winkelbereich in Elevation und Azimut abgedeckt wird. Das Radarsystem kann verschiedene Funktionen ausführen, in welchen die Strahlen jeweils verschiedene Aufgaben erfüllen, nämlich die Aufgabe einer Basissuche, einer Grobsuche, einer Feinsuche oder einer Zielverfolgung. Die Systemressourcenkennzahl beinhaltet somit den Anteil an Zeit, den das Radarsystem darauf verwendet hat, die für die jeweilige Aufgabe erforderlichen Strahlen zu erzeugen. Durch die Sonifikation dieser im Systemdatensatz enthaltenen Kennzahl wird es einem Benutzer, der das Radarsystem überwacht, erleichtert, wahrzunehmen, wenn eine der Funktionen nicht mehr mit dem erforderlichen Zeitanteil ausgeführt wird. Beispielsweise kann jeder Funktion des Radarsystems ein Ton in einer bestimmten Tonhöhe als akustischer Parameter zugeordnet sein, welcher abhängig vom Ausführungsstatus der Funktion im Audiosignal enthalten ist oder nicht. Ferner kann z. B. die Lautstärke dieses Tons abhängig vom Zeitanteil, den diese Funktion innerhalb des Zeitfensters benötigt, variieren.

Gemäß einer weiteren Ausführungsform des Verfahrens kann das System ein Kommunikationssystem mit zumindest zwei Kommunikationsknotenpunkten aufweisen, wobei die Kommunikationsknotenpunkte zumindest folgende Funktionen ausführen: ein Senden und Empfangen von Kommunikationsdaten an einen weiteren Kommunikationsknotenpunkt, ein Routing von empfangenen Kommunikationsdaten an einen weiteren Kommunikationsknotenpunkt, wobei als Funktionsinformationen die Funktionsressourcenkennzahl für jede der Funktionen ermittelt wird. Optional kann die Funktionsressourcenkennzahl für das Senden und Empfangen von Kommunikationsdaten durch eine oder mehrere der folgenden Kennzahlen definiert sein: eine Datenübertragungsrate, eine Datensendezeit, eine Sendewartezeit, ein Signal-Rausch-Verhältnis (SNR, Signal to Noise Ratio), ein MCS-Index (Modulation and Coding Scheme), ein UDP (User Datagram Protocol) Datendurchsatz oder dergleichen. Die Funktionsressourcenzahl für das Routing kann optional durch eine Anzahl an Datenpaketen pro Zeiteinheit definiert sein, die durch den jeweiligen Kommunikationsknotenpunkt geleitet werden. Auf diese Weise wird jeweils eine absolute oder relative Kennzahl angegeben, die beschreibt, zu welchem Anteil die Funktion die ihr von dem Knoten zur Verfügung gestellten Ressourcen ausnutzt. Die Sonifikation dieser Kennzahlen erleichtert erheblich die Überwachung der Funktionsfähigkeit eines Kommunikationssystems. Die Kommunikationsknotenpunkte können hierbei durch verschiedene Subsysteme gebildet sein. Beispielsweise könnten einer oder mehrere Knotenpunkte durch ein Sensorsystem, z. B. durch Radarsysteme wie oben beschrieben, durch ein Waffensystem (Effektor) und/oder durch einen Gefechtsstand gebildet sein.

Gemäß einer weiteren Ausführungsform des Verfahrens können die akustischen Parameter einen oder mehrere der folgenden Parameter umfassen:
Tonhöhe, Klangfarbe, Rhythmus, Lautstärke, Akkord, Modulation, Staccato oder dergleichen.

Gemäß einer Ausführungsform des Überwachungssystem kann das Sonifikationsmodul eine Steuerschnittstelle aufweisen und zusätzlich kann eine mit der Steuerschnittstelle des Sonifikationsmoduls verbundene Bedieneinrichtung vorgesehen sein, welche dazu eingerichtet ist, basierend auf einer Benutzereingabe einen Steuerbefehl zu erzeugen, wobei das Sonifikationsmodul dazu eingerichtet ist, die Erzeugung des Audiosignals gemäß dem Steuerbefehl anzupassen. Die Bedieneinrichtung des Überwachungssystems kann allgemein eine Eingabeeinrichtung zur Eingabe von Steuerbefehlen durch den Benutzer aufweisen, z. B. in Form einer Tastatur oder entsprechender Schaltflächen auf einem berührungssensitiven Display, wobei das Sonifikationsmodul dazu eingerichtet ist, die Erzeugung des Audiosignals gemäß den eingegebenen Steuerbefehlen anzupassen. Die Bedieneinrichtung kann damit zum Modifizieren von Einstellungen des Sonifikationsmoduls genutzt werden. Allgemein enthält ein Steuerbefehl Steuerdaten, auf denen basierend das Sonifikationsmodul die Erzeugung des Audiosignals anpasst. Insbesondere ist denkbar, dass die vorbestimmte Zuordnung von akustischen Parametern zu den Funktionsinformationen basierend auf den Steuerbefehlen vorgebbar ist. Beispielsweise kann vorgesehen sein, dass der Benutzer die Zuordnung eines bestimmten Tons zu einer bestimmten Funktionsressourcenkennzahl oder eine bestimmten Systemressourcenkennzahl oder einem Ausführungsstatus einer jeweiligen Funktion ändern kann. Somit kann die Sonifikation individuell an die Wünsche des Benutzers angepasst werden.

Gemäß einer weiteren Ausführungsform des Überwachungssystem kann die Bedieneinrichtung eine Sensoreinrichtung zum Erfassen von Bewegungen des Benutzers und/oder sprachlichen Äußerungen eines Benutzers als Benutzereingabe aufweisen und dazu eingerichtet sein, den Steuerbefehl basierend auf der erfassten Bewegung und/oder auf der erfassten Äußerung zu erzeugen. Die Eingabeeinrichtung kann somit auch als interaktive Eingabeeinrichtung gestaltet sein, welche einen Sensor aufweist, mit dem Gesten, Bewegungen, sprachliche Äußerungen oder dergleichen erfassbar sind, welchen ein Steuerbefehl zugeordnet ist. Der Sensor kann beispielsweise als optischer Sensor wie z. B. eine Kamera, als Eyetracker, als Datenhandschuh, als Mikrophon zur Spracherkennung oder dergleichen realisiert sein. Die zweite Bedieneinrichtung erleichtert dem Benutzer die intuitive Bedienung des Überwachungssystems.

Gemäß einer Ausführungsform des Überwachungssystems kann das Sonifikationsmodul dazu eingerichtet sein, basierend auf dem Steuerbefehl, die Zuordnung von akustischen Parametern zu den Dateninhalten des Systemzustandsdatensatzes zu ändern.

Gemäß einer weiteren Ausführungsform ist das Überwachungsmodul dazu eingerichtet, für einen aktuellen Zeitschritt Funktionsinformationen für eine Vielzahl von Funktionen des Systems zu ermitteln und einen Systemzustandsdatensatz zu erzeugen, welcher die Funktionsinformationen für die Vielzahl von Funktion des Systems zu einem jeweiligen Zeitschritt enthält, wobei der Steuerbefehl Steuerdaten enthält, welche eine Funktionsauswahl bestehend aus zumindest einer Funktion aus der Vielzahl von Funktion enthalten, und wobei das Sonifikationsmodul dazu eingerichtet ist, basierend auf den Steuerdaten aus dem Systemzustandsdatensatz Funktionsinformationen für die Funktionsauswahl auszuwählen und das Audiosignal nur für die Funktionsinformationen der ausgewählten Funktionsinformationen zu erzeugen. Demnach kann Funktionsüberwachung eines Systems, welches eine Vielzahl von Teilsystemen mit verschiedenen Funktionen aufweist, welche optional ihrerseits weitere Teilsysteme mit Funktionen aufweisen können, flexibel angepasst werden. Durch einen Steuerbefehl kann ein Benutzer diejenigen Funktionen, deren Funktionskennzahlen sonifiziert werden sollen, gezielt auswählen. Somit kann eine Detailtiefe der Funktionsüberwachung auf einfache und effiziente Weise angepasst werden.

Im Folgenden wird die Erfindung unter Bezugnahme auf die Figuren der Zeichnungen erläutert. Von den Figuren zeigen:
- Fig. 1: eine schematische Darstellung eines Überwachungssystems gemäß einem Ausführungsbeispiel der Erfindung als Blockschaltbild;
- Fig. 2: eine schematische Darstellung eines Überwachungssystems gemäß einem Ausführungsbeispiel der Erfindung, welches zur Überwachung eines Radarsystems verwendet wird;
- Fig. 3: eine symbolisch-funktionale Darstellung einer Sonifikation von Funktionsinformationen eines Radarsystems in einem Verfahren gemäß einem Ausführungsbeispiel der Erfindung mittels des Überwachungssystems gemäß Fig. 2;
- Fig. 4: eine symbolisch-funktionale Darstellung einer Sonifikation von Funktionsinformationen eines Radarsystems in einem Verfahren gemäß einem Ausführungsbeispiel der Erfindung mittels des Überwachungssystems gemäß Fig. 2;
- Fig. 5: eine symbolisch-funktionale Darstellung einer Sonifikation von Funktionsinformationen eines Radarsystems in einem Verfahren gemäß einem Ausführungsbeispiel der Erfindung mittels des Überwachungssystems gemäß Fig. 2;
- Fig. 6: eine symbolisch-funktionale Darstellung einer Sonifikation von Funktionsinformationen eines Radarsystems in einem Verfahren gemäß einem Ausführungsbeispiel der Erfindung mittels des Überwachungssystems gemäß Fig. 2;
- Fig. 7: eine schematische Darstellung eines Überwachungssystems gemäß einem Ausführungsbeispiel der Erfindung, welches zur Überwachung eines Kommunikationssystems verwendet wird;
- Fig. 8: eine symbolisch-funktionale Darstellung einer Sonifikation von Funktionsinformationen eines Kommunikationssystems in einem Verfahren gemäß einem Ausführungsbeispiel der Erfindung mittels des Überwachungssystems gemäß Fig. 7;
- Fig. 9: eine symbolisch-funktionale Darstellung einer Sonifikation von Funktionsinformationen eines Kommunikationssystems in einem Verfahren gemäß einem Ausführungsbeispiel der Erfindung mittels des Überwachungssystems gemäß Fig. 7;
- Fig. 10: eine symbolisch-funktionale Darstellung einer Sonifikation von Funktionsinformationen eines Kommunikationssystems in einem Verfahren gemäß einem Ausführungsbeispiel der Erfindung mittels des Überwachungssystems gemäß Fig. 7;
- Fig. 11: eine schematische Darstellung der Funktionsweise eines Sonifikationsmoduls eines Überwachungssystems gemäß einem Ausführungsbeispiel der Erfindung; und
- Fig. 12: ein Ablaufdiagramm eines Verfahrens gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

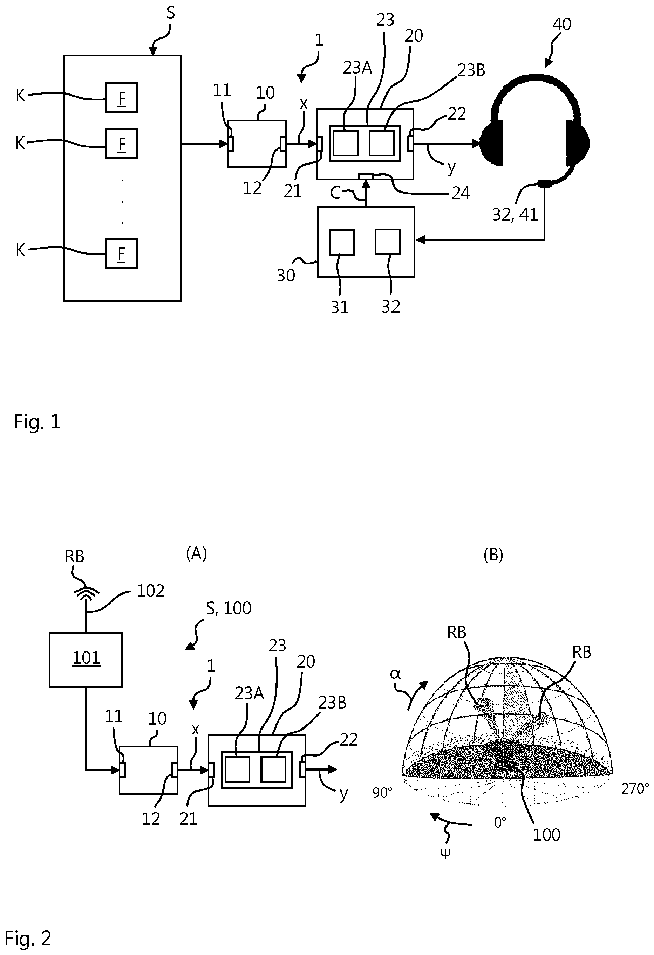

Fig. 1 zeigt beispielhaft ein Überwachungssystem 1 zur Überwachung von Funktionen F eines Systems S. Das zu überwachende System S kann verschiedene Systemkomponenten K aufweisen, welche jeweils eine oder mehrere Funktionen F ausführen. Beispielsweise kann das System S ein Radarsystem 100 sein oder aufweisen, welches als Systemkomponenten K einen Radartransceiver 101 zum Erzeugen eines elektromagnetischen Signals und eine Antenne 102 zum gerichteten Abstrahlen des Signals aufweist, wie dies beispielhaft in Fig. 2 dargestellt ist. Weiterhin beispielhaft kann das System S ein Kommunikationssystem 200 mit mehreren Kommunikationsknotenpunkten 201, 202, 203, 204 als Systemkomponenten sein oder ein solches Kommunikationssystem 200 aufweisen. Weiterhin kommen als System S beispielsweise Fahrzeuge, insbesondere Luftfahrzeuge, Kraftwerke, Materialfördersysteme oder dergleichen in Frage. Allgemein kann das System S als Systemkomponenten K beispielsweise aufweisen einen Sensor, welcher eine physikalischen Größe misst, einen Transceiver, welcher elektrische, optische oder elektromagnetische Signale sendet und empfängt, einen Aktuator, welcher eine weitere Komponente des Systems oder ein Arbeitsmedium mechanisch mit einer Kraft beaufschlagt, ein Datennetzwerk, welches Daten zwischen verschiedenen Komponenten des Systems überträgt, einen Prozessor, welcher eingehende elektrische Signale verarbeitet und verarbeitetet Signale als Ausgabewerte ausgibt.

Innerhalb des überwachten Systems S wird der Zustand einer jeweiligen Funktion F zu jedem Zeitpunkt oder aktuellen Zeitschritt durch Funktionsinformationen beschrieben. Diese Funktionsinformationen können insbesondere einen Ausführungsstatus der Funktion F, also die Information, ob die jeweilige Funktion zu dem aktuellen Zeitpunkt ausgeführt wird, beinhalten. Eine Funktionsinformation kann alternativ oder zusätzlich in einer Funktionsressourcenkennzahl beinhaltet sein, welche eine Auslastung einer vom System bereitgestellten Ressource durch die jeweilige Funktion repräsentiert, oder in einer Systemressourcenkennzahl, welche einen Anteil der Funktion an der Auslastung des Systems repräsentiert.

Wie in Fig. 1 rein beispielhaft dargestellt ist, weist das Überwachungssystem 1 ein Überwachungsmodul 10, ein Sonifikationsmodul 20 und eine Bedieneinrichtung 30 auf. Das Überwachungsmodul 10 weist eine Systemschnittstelle 11 und eine Übergabeschnittstelle 12 auf. Das Überwachungsmodul 10 kann zumindest einen Prozessor (nicht dargestellt) aufweisen, welcher beispielsweise durch ein ASIC, FPGA, PLD, einen digitalen Signalprozessor, einen Mikrocontroller oder eine andere geeignete Recheneinrichtung realisiert sein kann, die in der Lage ist, an der Systemschnittstelle 11 eingehende Signale zu verarbeiten und verarbeitete Signale in Ausgabewerte zu verwandeln, die an der Übergabeschnittstelle 12 ausgegeben werden können. Der Prozessor des Überwachungsmoduls 10 kann überdies über einen internen Speicher verfügen. Es kann auch möglich sein, dass ein separater (in Fig. 1 nicht explizit gezeigter) Speicherbaustein vorgesehen ist, der mit dem Prozessor gekoppelt ist, und von dem der Prozessor gespeicherte Daten zur Verarbeitung abrufen kann. Die Systemschnittstelle 11 und die

Übergabeschnittstelle 12 können jeweils zur kabelgebundenen oder kabellosen Daten- bzw. Signalübertragung eingerichtet sein. Beispielsweise können die Systemschnittstelle 11 und/oder die Übergabeschnittstelle 12 als Bus-Schnittstelle, z. B. als USB-Schnittstelle oder als CAN-Bus-Schnittstelle oder dergleichen realisiert sein. Auch ist denkbar, die Systemschnittstelle 11 und/oder die Übergabeschnittstelle 12 als WiFi-Schnittstelle, als Bluetooth® Schnittstelle, als optische Schnittstelle oder dergleichen zu realisieren.

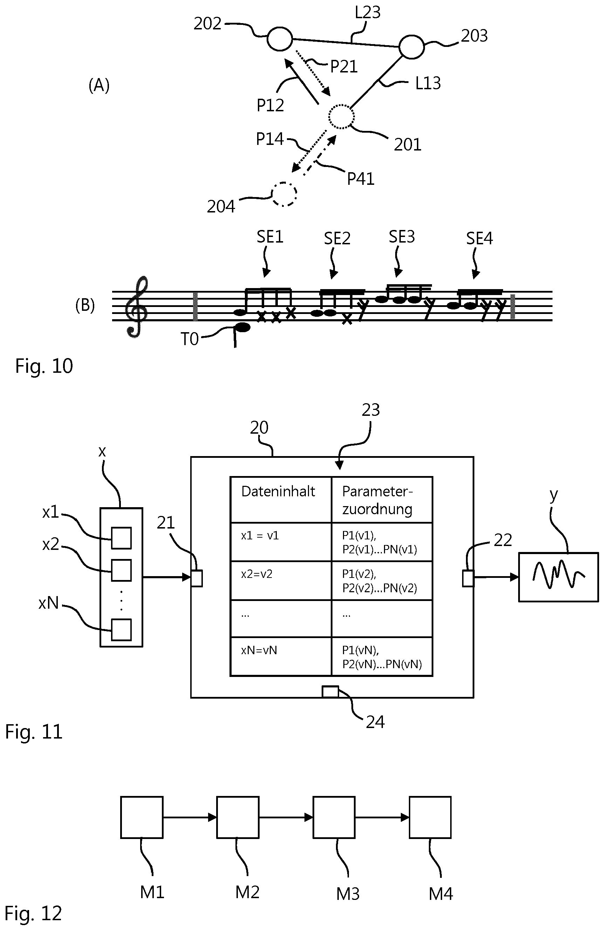

Wie in Fig. 1 symbolisch dargestellt ist, ist die Systemschnittstelle 11 zur Verbindung mit dem zu überwachenden System S vorgesehen. Beispielsweise kann die Systemschnittstelle 11 mit Sensoren (nicht dargestellt) des Systems S verbunden sein, welche physikalische Größen erfassen und als Funktionsinformationen bereitstellen. Das Überwachungsmodul 10 ist dazu eingerichtet, für einen aktuellen Zeitschritt Funktionsinformationen für zumindest eine Funktion F des Systems S zu ermitteln und einen Systemzustandsdatensatz x zu erzeugen, welcher die Funktionsinformationen für zumindest eine Funktion F des Systems zu einem jeweiligen Zeitschritt enthält. Das Überwachungsmodul 10 erhält somit von dem überwachten System S erhaltenen Daten der verschiedenen Systemfunktionen F, z. B. in Form von Sensordaten oder in Form von vorverarbeiteten Daten, und ermittelt daraus die Funktionsinformationen, das heißt, den Ausführungsstatus der jeweiligen Funktion F, die Funktionsressourcenkennzahl und/oder die Systemressourcenkennzahl. Die ermittelten Funktionsinformationen werden dann in einem Systemzustandsdatensatz x zusammengefasst. Ein Systemzustandsdatensatz x ist symbolisch in Fig. 11 dargestellt. Wie in Fig. 11 symbolisch und rein beispielhaft dargestellt, enthält der Systemzustandsdatensatz x verschiedene Funktionsinformationen als Dateninhalte x1, x2...xN. Beispielsweise kann der Dateninhalt x1 als Wert v1 den Ausführungsstatus einer Funktion F in Form von "0" ("wird nicht ausgeführt") oder "1" ("wird ausgeführt") enthalten, der Dateninhalt x2 als Wert v2 eine Systemressourcenkennzahl oder eine Funktionsressourcenkennzahl enthalten usw. Allgemein weist jeder Dateninhalt xN einen Wert vN auf. Die Funktionsinformationen können für eine oder mehrere Funktionen F in dem Systemzustandsdatensatz x als Dateninhalte xN enthalten sein. Für einen aktuellen Zeitschritt wird je ein Systemdatensatz erzeugt. Optional kann eine Bedieneinrichtung 30, wie in Fig. 1 dargestellt, an eine Steuerschnittstelle 24 des Sonifikationsmoduls 20 angeschlossen werden, um z. B. eine Konfiguration der Sonifikation zu veranlassen, wie dies nachfolgend noch im Detail erläutert wird.

Das Sonifikationsmodul 20 weist eine Eingangsschnittstelle 21, eine Ausgangsschnittstelle 22, eine Steuerschnittstelle 24 und eine Verarbeitungseinheit 23 auf. Die Eingangsschnittstelle 21 ist mit der Übergabeschnittstelle 12 des Überwachungsmoduls 10 verbunden und kann als Datenschnittstelle zur kabelgebundenen oder kabellosen Datenübertragung realisiert sein. Beispielsweise kann die Eingangsschnittstelle 21 als kabelgebundene Bus-Schnittstelle, z. B. als USB-Schnittstelle oder als CAN-Bus-Schnittstelle realisiert sein. Auch ist denkbar, die Eingangsschnittstelle 21 als WiFi-Schnittstelle, als Bluetooth® Schnittstelle, als optische Schnittstelle oder dergleichen zu realisieren. Die Ausgangsschnittstelle 22 und die Steuerschnittstelle 24 können ebenfalls als Datenschnittstelle zur kabelgebundenen oder kabellosen Datenübertragung realisiert sein.

Die Verarbeitungseinheit 23 kann als ein Computer mit zumindest einem Prozessor 23A und zumindest einem Datenspeicher 23B realisiert sein. Der Prozessor 23A kann beispielsweise ein ASIC, FPGA, PLD, ein digitaler Signalprozessor, ein Mikrocontroller oder eine andere geeignete Recheneinrichtung sein, die in der Lage ist, eingehende, die Funktionsinformationen enthaltende Signale zu verarbeiten und verarbeitete Funktionsinformationen in Audiosignale zu verwandeln. Der Datenspeicher 23B kann insbesondere ein nicht-flüchtiger Datenspeicher, wie z. B. ein EEPROM oder eine Festplatte sein, welcher ein Softwareprogramm speichert, welches dazu ausgelegt ist, den Prozessor 23A zur Ausführung von Schritten zur Sonifikation der Funktionsinformationen zu veranlassen. Das Sonifikationsmodul 20 kann auch rein als Softwaremodul bzw. Softwareprogramm realisiert sein, welches dazu ausgelegt ist, einen Prozessor zur Ausführung von Schritten zur Sonifikation der Funktionsinformationen zu veranlassen. Beispielsweise ist denkbar, dass das Überwachungsmodul 10 und die Verarbeitungseinheit 23 des Sonifikationsmoduls 20 auf denselben Prozessor und/oder Datenspeicher zurückgreifen.

Fig. 11 zeigt schematisch die Funktionsweise der Verarbeitungseinheit 23 des Sonifikationsmoduls 20. Die Verarbeitungseinheit 23 ermittelt für jeden Dateninhalt xl...xN des an der Eingangsschnittstelle 21 von dem Überwachungsmodul 10 erhaltenen Systemzustandsdatensatz x akustische Parameter P1, P2...PN. Die akustischen Parameter P1, P2...PN können z. B. eine Tonhöhe, eine Klangfarbe, ein Rhythmus, eine Lautstärke, ein Akkord, eine Modulation, ein Staccato oder ähnliche Parameter sein. Für jeden Dateninhalt xl...xN kann z. B. eine Look-up-Tabelle vorliegen, in welchem für jeden Wert v1 bestimmte akustische Parameter P1, P2...PN hinterlegt sind. Z. B. können für den Dateninhalt x2, welcher beispielsweise die Systemressourcenkennzahl einer Funktion F enthalten kann, bei einem Wert v2, eine bestimmte Tonhöhe und eine bestimmte Klangfarbe als Parameter P1, P2 in der Look-up-Tabelle hinterlegt sein. Gemäß dieser jeweils vorbestimmten, systematischen Zuordnung von akustischen Parametern zu den Funktionsinformationen ermittelt die Verarbeitungseinheit 23 die akustischen Parameter.

Ferner erzeugt die Verarbeitungseinheit 23 ein die ermittelten akustischen Parameter repräsentierendes Audiosignal y und gibt das Audiosignal y an der Ausgangsschnittstelle 22 aus, wie dies in Fig. 11 symbolisch dargestellt ist. Damit werden die Funktionsinformationen durch die Verarbeitungseinheit 23 gemäß einer vorbestimmten Regel abhängig von den die Funktionsinformationen enthaltenden Dateninhalten als Audiosignal codiert. Es kann hierbei beispielsweise vorgesehen sein, dass die Zuordnung der Parameter zu den Dateninhalten eine sequenzielle Abfolge vorsieht, wonach die den Dateninhalten x1-xN zugeordneten Parameter, also Töne, Lautstärke etc. aufeinander folgend in dem akustischen Signal codiert werden. Beispielsweise kann zuerst das akustische Parameterset P1,...,PN zu Dateninhalt x1, danach das akustische Parameterset P1,...,PN zu Dateninhalt x2, usw. in dem akustischen Signal ausgegeben werden. Alternativ oder zusätzlich ist auch denkbar, dass zwei oder mehr Dateninhalte x1, x2,...xN gleichzeitig, z. B. als Mehrklang in das akustische Signal codiert werden.

Das Audiosignal y wird an der Ausgangsschnittstelle 22 bereitgestellt und kann mittels eines optionalen elektroakustischen Wandlers 40, welcher z. B. wie in Fig. 1 dargestellt als Kopfhörer realisiert sein kann, in ein durch einen menschlichen Benutzer wahrnehmbares akustisches Signal umgewandelt werden. Der optionale elektroakustische Wandler 40 weist allgemein zumindest eine Schallquelle, optional zumindest zwei oder mehr Schallquellen auf, welche dazu eingerichtet sind, Schall basierend auf dem Audiosignal y zu erzeugen.

Wie in Fig. 1 weiterhin dargestellt ist, ist die Bedieneinrichtung 30 mit dem Sonifikationsmodul 20 verbunden. Insbesondere kann die Bedieneinrichtung 30 mit der Steuerschnittstelle 24 des Sonifikationsmoduls 20 verbunden sein. Die Bedieneinrichtung 30 kann insbesondere als ein Computer mit zumindest einem Prozessor (nicht dargestellt) und zumindest einem Datenspeicher (nicht dargestellt) realisiert sein. Der Prozessor kann beispielsweise ein ASIC, FPGA, PLD, digitaler Signalprozessor, ein Mikrocontroller oder eine andere geeignete Recheneinrichtung sein, die in der Lage ist, eingehende Signale zu verarbeiten und verarbeitete Signale in Ausgabewerte zu verwandeln. Die Bedieneinrichtung 30 kann insbesondere einen separaten Prozessor aufweisen oder mit dem Sonifikationsmodul 20 und/oder mit dem Überwachungsmodul 10 gemeinsam auf einen Prozessor und/oder Datenspeicher zurückgreifen.
Die Bedieneinrichtung 30 kann insbesondere eine Eingabeeinrichtung 31 aufweisen, welche z. B. als Tastatur oder allgemein als Eingabeschnittstelle realisiert ist, über welche ein Benutzer Benutzereingaben in Form von Steuerbefehlen eingeben kann. Die Bedieneinrichtung 30 kann basierend auf den Steuerbefehlen Steuerdaten bzw. Steuersignale erzeugen, auf Basis derer das Sonifikationsmodul 20 zur Ausführung vorbestimmter Schritte veranlasst wird. Dies wird nachfolgend noch im Detail erläutert. Die Bedieneinrichtung 30 kann alternativ oder zusätzlich zu der Eingabeeinrichtung 31 eine Sensoreinrichtung 32 zum Erfassen von Bewegungen des Benutzers und/oder sprachlichen Äußerungen eines Benutzers als Benutzereingabe aufweisen und dazu eingerichtet sein, den Steuerbefehl C basierend auf der erfassten Bewegung und/oder auf der erfassten Äußerung zu erzeugen. In Fig. 1 ist symbolisch dargestellt, dass der optionale akustische Wandler 40 ein Mikrophon 41 aufweist, welcher eine Sensoreinrichtung 32 zum Erfassen sprachlicher Äußerungen bildet. Die Sensoreinrichtung 32 kann beispielsweise auch als optischer Sensor, durch in einen sogenannten Datenhandschuh integrierte kapazitive Sensoren oder in ähnlicher Weise realisiert sein. Optional kann die Bedieneinrichtung 30 einen Prozessor oder allgemein einen Signalwandler (nicht dargestellt) aufweisen, welcher zur Umwandlung der von der Sensoreinrichtung 32 erfassten Daten in Steuerbefehle eingerichtet ist.

Das Sonifikationsmodul 20 kann insbesondere dazu eingerichtet sein, basierend auf dem durch die Bedieneinrichtung 30 erzeugten Steuerbefehl C die Zuordnung von akustischen Parametern zu den Dateninhalten des Systemzustandsdatensatzes x zu ändern. Durch einen entsprechenden Steuerbefehl, den der Benutzer als Bedienereingabe an der Bedieneinrichtung 30 tätigt, kann der Benutzer somit eine Zuordnung der akustischen Parameter zu den Dateninhalten des Systemzustandsdatensatzes x konfigurieren. Beispielsweise kann der Benutzer für eine bestimmte Funktion eine Tonhöhe und/oder eine Klangfarbe, also z. B. den Klang einer Gitarrenseite, in einer Benutzereingabe auswählen. Die Bedieneinrichtung 30 erzeugt basierend auf der Eingabe einen entsprechenden Steuerbefehl C, welcher die Verarbeitungseinheit 23 des Sonifikationsmoduls 20 veranlasst, die z. B. in einer Look-up-Tabelle gespeicherte Zuordnung von Dateninhalt zu akustischem Parameter entsprechend dem Steuerbefehl C zu ändern. Das Audiosignal y wird dann dementsprechend erzeugt.
Wenn durch das Überwachungsmodul 10 Funktionsinformationen für eine Vielzahl von Funktionen F des Systems S ermittelt werden, wird vorzugsweise ein Systemzustandsdatensatz x erzeugt, welcher die Funktionsinformationen für die gesamte Vielzahl von Funktion F des Systems zu dem jeweiligen Zeitschritt enthält. Mittels der Bedieneinrichtung 30 kann optional ein Steuerbefehl C erzeugt werden, z. B. durch eine entsprechende Benutzereingabe, welcher Steuerdaten enthält, die eine Funktionsauswahl bestehend aus zumindest einer Funktion F aus der Vielzahl von Funktion F enthalten. Über die Bedieneinrichtung 30 kann der Benutzer somit eine oder mehrere überwachte Funktionen des Systems auswählen. Optional ist das Sonifikationsmodul 20 dazu eingerichtet, basierend auf den Steuerdaten aus dem Systemzustandsdatensatz x die Funktionsinformationen für die Funktionsauswahl auszuwählen und das Audiosignal nur für die Funktionsinformationen der ausgewählten Funktionsinformationen zu erzeugen. Somit kann über den Steuerbefehl eine Auswahl getroffen werden, die definiert, von welchen Funktionen F des Systems S die Funktionsinformationen durch das Sonifikationsmodul 20 sonifiziert werden sollen. Damit kann die Detailtiefe der Sonifikation variabel verändert werden.

In Fig. 2 ist in Ansicht (A) rein schematisch und lediglich beispielhaft ein zu überwachendes System S gezeigt, welches ein Radarsystem 100 aufweist. Das Radarsystem 100 weist einen Radartransceiver 101 auf, der dazu eingerichtet ist, ein elektromagnetisches Signal mit einer vorbestimmten Frequenz zu erzeugen und ein von einem Objekt (nicht dargestellt) reflektiertes Antwortsignal zu ermitteln. Das Radarsystem 100 weist außerdem eine mit dem Radartransceiver 101 verbundene Radarantenne 102 auf, welche das vom Radartransceiver 101 erzeugte Signal als Radarstrahl RB in gerichteter Weise abstrahlt. Wie dies in Ansicht (B) von Fig. 2 in vereinfachter Weise dargestellt ist, werden zur Abdeckung eines hemisphärischen Raums um das Radarsystem 100 eine Vielzahl einzelner Strahlen RB in verschiedenen Richtungen, welche jeweils durch einen Azimutwinkel Ψ und einen Elevationswinkel α definiert sind, gleichzeitig oder nacheinander abgestrahlt. Die Einzelstrahlen RB können jeweils für verschiedene Aufgaben des Radarsystems 100 verwendet werden. Das Radarsystem 100 kann innerhalb des vorbestimmten Zeitfensters, das zur Abdeckung der Hemisphäre durch die einzelnen Strahlen RB und damit eine Basissuche zur Detektion neuer Objekte und/oder ein Grobsuche zur Klassifizierung von Objekten und/oder eine Feinsuche zur Erkennung von Objekten in einem vorbestimmten räumlichen Bereich und/oder eine Zielverfolgung eines erkannten Objekts als Funktionen F ausführen.

Zur Überwachung der Funktionen F des Radarsystems 100 kann das Überwachungsmodul 10 über dessen Systemschnittstelle 11 mit dem Radartransceiver 101 oder allgemein mit dem Radarsystem 100 verbunden sein, wie dies in Ansicht (A) von Fig. 2 schematisch dargestellt ist. Das

Überwachungsmodul 10 greift am Radarsystem 100 Daten ab, z. B. in Form von Rohdaten und ermittelt für jede der Funktionen, die das Radarsystem 100 in Bezug auf die Einzelstrahlen RB ausführt, den Ausführungsstatus und/oder die Systemressourcenkennzahl als Funktionsinformation. Die Systemressourcenkennzahl ist hierbei durch einen Zeitanteil an dem Zeitfenster definiert, für welchen die jeweilige Funktion während des Zeitfensters ausgeführt wird. Für jeden Zeitschritt, wobei ein Zeitschritt hierbei insbesondere der Dauer des vorbestimmten Zeitfensters entsprechen kann, erzeugt das Überwachungsmodul 10 jeweils einen Systemzustandsdatensatz x, in dem die genannten Funktionsinformationen als Dateninhalte xN enthalten sind. Wie dies in Ansicht (A) von Fig. 2 schematisch dargestellt ist, wird der Systemzustandsdatensatz x an das Sonifikationsmodul 20 weitergeleitet, welches darauf basierend ein Audiosignal y erzeugt, wie dies allgemein anhand der Fign. 1 und 11 erläutert wurde. Optional kann eine Bedieneinrichtung 30, wie in Fig. 1 dargestellt und wie bereits erläutert, an das Sonifikationsmodul 20 angeschlossen werden, um z. B. eine Konfiguration der Sonifikation zu veranlassen, z.B. indem eine Funktionsauswahl getroffen, um nur bestimmte Funktionen des Radarsystems zu sonifizieren, oder indem die Zuordnung akustischer Parameter angepasst wird.

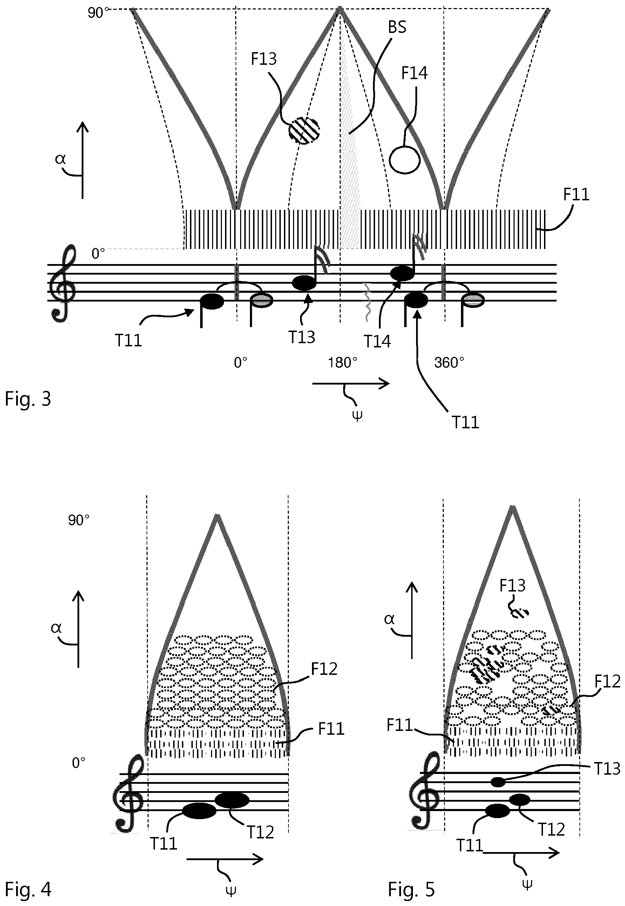

In den Fign. 3 bis 6 ist rein beispielhaft eine mögliche Sonifikation der ermittelten Funktionsinformationen des Radarsystems 100 dargestellt. In dem oberen Teil der Fign. 3 bis 6 ist jeweils symbolisch angedeutet, welche Funktionen F das Radarsystem 100 in Bezug auf Azimut Ψ und Elevation α ausführt. Im unteren Teil der Fign. 3 bis 6 ist jeweils eine Notenzeile dargestellt, in welcher das durch die Verarbeitungseinheit 23 des Sonifikationsmoduls 20 erzeugte akustische Signal in Form von Noten dargestellt ist.

In Fig. 3 ist beispielhaft dargestellt, dass das Radarsystem 100 eine Basissuche F11 über den gesamten Azimutbereich von 360 Grad ausführt, mit Ausnahme eines kurzen Abschnitts BS im Bereich von 180 Grad. Dieser Abschnitt BS wird als Blanking Sektor bezeichnet. Ferner führt das Radarsystem eine Feinsuche F13 und eine Zielverfolgung F14 durch. In der in Fig. 3 gezeigten Notenzeile ist eine Sonifikation des Ausführungsstatus der jeweiligen Funktionen F11, F13 und F14 dargestellt. Der Ausführungsstatus "Funktion wird ausgeführt" wird für jede Funktion F11, F13, F14 durch einen Ton einer bestimmten Tonhöhe codiert. Der den Ausführungsstatus repräsentierende Ton wird nur erzeugt, wenn die jeweilige Funktion F11, F13, F14 ausgeführt wird. Der Basissuche F11 ist im Beispiel von Fig. 3 der Ton T11 zugeordnet und wird, entsprechend dem Ausführungsstatus der Basissuche F11, dauerhaft erzeugt und nur während des Blanking Sektors BS durch eine Pause unterbrochen. Der Feinsuche F13 ist im Beispiel von Fig. 3 der Ton T13 zugeordnet und wird, entsprechend dem Ausführungsstatus der Feinsuche F13, nur kurz erzeugt. Der Zielverfolgung F14 ist im Beispiel von Fig. 3 der Ton T14 zugeordnet und wird, entsprechend dem Ausführungsstatus der Zielverfolgung F14, nur kurz erzeugt.

In den Fign. 4 bis 6 ist beispielhaft die Sonifikation der Systemressourcenkennzahl des Radarsystems 100 dargestellt. In den Fign. 4 bis 6 symbolisiert die Anzahl der im oberen Teil der Figuren jeweils dargestellten Kreise rein symbolisch die Anzahl der Strahlen RB, die für die jeweilige Funktion Basissuche F11, Grobsuche F12, Feinsuche F13 und Zielverfolgung F14 verwendet werden. Da die Anzahl der Strahlen RB, die innerhalb des Zeitfensters erzeugt und damit für die verschiedenen Funktionen F11, F12, F13, F14 verwendet werden können, begrenzt ist, stellen die Zeitanteile der jeweiligen Funktion F11, F12, F13, F14 eine Systemressourcenkennzahl dar. In Fig. 4 ist dargestellt, dass lediglich eine Basissuche F11 und eine Grobsuche F12 durchgeführt werden. Dementsprechend werden nacheinander ein der Basissuche F11 zugeordneter Ton T11 und ein der Grobsuche F12 zugeordneter Ton T12 erzeugt. Diese können auch als Zweiklang gleichzeitig erzeugt werden. Die bloße Erzeugung dieser Töne T11, T12 repräsentiert den Ausführungsstatus der Funktionen. In Fig. 4 werden zu etwa gleichen Zeitanteilen die Funktionen Basissuche F11 und Grobsuche F12 ausgeführt. Die Töne T11, T12 werden daher in etwa mit gleicher Lautstärke erzeugt.

In Fig. 5 ist erkennbar, dass zusätzlich eine Feinsuche F13 durchgeführt wird. Hierzu wurde die Anzahl der Strahlen RB, die zur Grobsuche F12 verwendet werden, im Vergleich zu Fig. 4 verringert. Wie in Fig. 5 zudem beispielhaft dargestellt wird, wird für die Feinsuche ein Ton T13 erzeugt, was den Ausführungsstatus der Funktion Feinsuche F13 sonifiziert. Da der Zeitanteil der Feinsuche F13 klein ist, was durch die Systemressourcenkennzahl dieser Funktion repräsentiert ist, ist Lautstärke des Tons T13 relativ gering, was in Fig. 5 symbolisch durch die Größe der den Ton T13 darstellenden Note dargestellt ist. Die Lautstärke des Tons T12, der zur Grobsuche F12 gehört, ist im Vergleich zu Fig. 4 entsprechend der Verkleinerung der Systemressourcenkennzahl ebenfalls verringert.

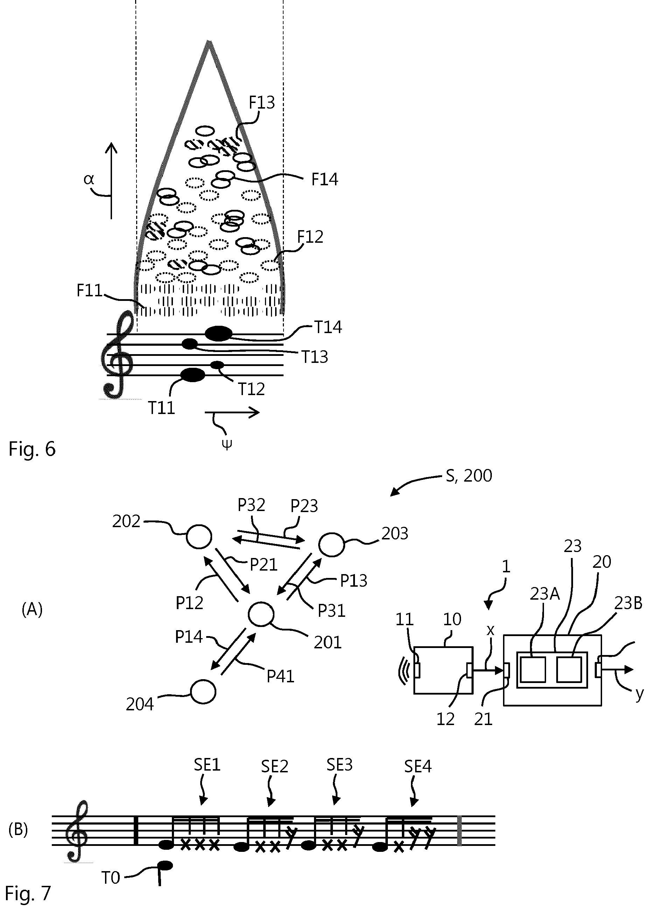

In Fig. 6 ist beispielhaft dargestellt, dass zusätzlich zur Basissuche F11, Grobsuche F12, Feinsuche F13 noch eine Zielverfolgung F14 durchgeführt wird. Um die Zielverfolgung F14 mit den im Zeitfenster zur Verfügung stehenden Strahlen RB durchführen zu können, wurde die Anzahl der für die Basissuche F11 verwendeten Strahlen RB verringert. Ferner wurde die Anzahl der Strahlen RB für die Grobsuche F12 verringert. Wie in Fig. 6 erkennbar, wird der Ausführungsstatus der Zielverfolgung F14 durch einen zusätzlichen Ton T11 sonifiziert. Die Lautstärke der Töne T11 und T12 wurde entsprechend der verringerten Anzahl der für die Funktionen Basissuche F11 und Grobsuche F12 verwendeten Strahlen RB verringert.

Die Zuordnung des akustischen Parameters Lautstärke zu der Systemressourcenkennzahl und des akustischen Parameters Tonhöhe zu einer jeweiligen Funktion ist rein beispielhaft und kann in beliebiger Weise gewählt werden. Beispielsweise kann ein Benutzer des Überwachungssystems 1 die Zuordnung über eine entsprechende Eingabe an der Bedieneinrichtung 30 konfigurieren.

Fig. 7 zeigt in Ansicht (A) rein schematisch und lediglich beispielhaft ein Kommunikationssystem 200, welches einen ersten Kommunikationsknotenpunkt 201, z. B. eine zentrale Steuereinrichtung (z. B. in Form eines Gefechtsstands), einen zweiten Kommunikationsknotenpunkt 202, z. B. in Form eines Sensors, einen dritten Kommunikationsknotenpunkt 203, z. B. in Form eines Effektors, und einen vierten Kommunikationsknotenpunkt 204, z. B. in Form eines weiteren Sensors, aufweist.

Der erste Kommunikationskontenpunkt 201 ist mit jedem der weiteren Kommunikationsknotenpunkte 202, 203, 204 verbunden und kann Daten zu diesen senden oder von diesen empfangen. Ferner kann der erste Kommunikationsknotenpunkt 201 die von jeweils einem der weiteren Kommunikationsknotenpunkte 202, 203, 204 empfangenen Daten zu jeweils einem anderen Kommunikationsknotenpunkt 202, 203, 204 weiterleiten bzw. routen.

Der zweite Kommunikationsknotenpunkt 202 ist mit dem ersten und dem dritten Kommunikationsknotenpunkt 201, 203 verbunden und kann dementsprechend Daten an diese senden und von diesen empfangen sowie Daten zwischen dem ersten und dem dritten Kommunikationsknotenpunkt 201, 203 routen.

Der dritte Kommunikationsknotenpunkt 203 ist mit dem ersten und dem zweiten Kommunikationsknotenpunkt 201, 202 verbunden und kann dementsprechend Daten an diese senden und von diesen empfangen sowie Daten zwischen dem ersten und dem zweiten Kommunikationsknotenpunkt 201, 202 routen.

Der vierte Kommunikationsknotenpunkt 204 ist lediglich mit dem ersten Kommunikationsknotenpunkt 201 verbunden und kann dementsprechend von diesem Daten empfangen und an diesen Senden.

Wie in Ansicht (A) von Fig. 7 schematisch dargestellt ist, kann das Überwachungssystem 1 mittels der Systemschnittstelle 11 der Überwachungseinrichtung 10 mit dem Kommunikationssystem 200 verbunden werden, z. B. über eine drahtlose Verbindung oder indem das Überwachungssystem 1 integraler Bestandteil eines der Kommunikationsknotenpunkte 201-204 ist und an diesen entsprechend angebunden ist. Wenn der erste Kommunikationsknotenpunkt 201 beispielsweise eine zentrale Steuereinrichtung ist, ermöglicht der erste Kommunikationsknotenpunkt 201 dem optional integrierten oder angeschlossenen Überwachungssystem 1, dass die Überwachungseinrichtung 10 Funktionsinformationen aller Kommunikationsknotenpunkte 201-204 erhält, woraus die Überwachungseinrichtung 10 für jeden Zeitschritt einen Systemzustandsdatensatz x erzeugt. Das Sonifikationsmodul 20 erzeugt basierend auf diesem Systemzustandsdatensatz x entsprechend den in diesem als Dateninhalt enthaltenen Funktionsinformationen ein zugehöriges Audiosignal y. Optional kann eine Bedieneinrichtung 30, wie in Fig. 1 dargestellt und wie bereits erläutert, an das Sonifikationsmodul 20 angeschlossen werden, um z. B. eine Konfiguration der Sonifikation zu veranlassen, z.B. indem eine Funktionsauswahl getroffen, um nur bestimmte Kommunikationsknotenpunkte bzw. nur bestimmte Funktionen des jeweiligen Knotenpunkts zu sonifizieren, oder indem die Zuordnung akustischer Parameter angepasst wird Selbstverständlich kann das Überwachungssystem 1 auch bei Kommunikationssystemen verwendet werden, die anders als in Ansicht (A) von Fig. 7 dargestellt aufgebaut sind. Allgemein umfasst das Kommunikationssystem 200 zumindest zwei Kommunikationsknotenpunkte 201, 202, 203, 204, wobei die Kommunikationsknotenpunkte zumindest folgende Funktionen ausführen: ein Senden und Empfangen von Kommunikationsdaten an einen weiteren Kommunikationsknotenpunkt 201, 202, 203, 204 und ein Routing von empfangenen Kommunikationsdaten an einen weiteren Kommunikationsknotenpunkt. Das Senden von Daten von einem Kommunikationsknotenpunkt zu einem anderen ist in Ansicht (A) von Fig. 7 symbolisch durch die Pfeile P12, P13, P14, P21, P23, P31, P32, P41 dargestellt.

Das Überwachungsmodul 10 ermittelt als Funktionsinformationen die Funktionsressourcenkennzahl für jede der Funktionen, optional für jeden Kommunikationsknotenpunkt 201-204. Die Funktionsressourcenkennzahl für das Senden und Empfangen von Kommunikationsdaten kann beispielsweise durch eine oder mehrere der folgenden Kennzahlen definiert sein: eine Datenübertragungsrate, eine Datensendezeit, eine Sendewartezeit, ein Signal-Rausch-Verhältnis (SNR, Signal to Noise Ratio), ein MCS-Index (Modulation and Coding Scheme), ein UDP (User Datagram Protocol) Datendurchsatz oder dergleichen. Die Funktionsressourcenzahl für das Routing kann beispielsweise durch eine Anzahl an Datenpaketen pro Zeiteinheit definiert sein, die durch den jeweiligen Kommunikationsknotenpunkt geleitet werden.

In den Fign. 7 bis 10 ist in Ansicht (B) ferner jeweils eine Notenzeile dargestellt, in welcher rein beispielhaft und symbolisch das durch die Verarbeitungseinheit 23 des Sonifikationsmoduls 20 erzeugte akustische Signal in Form von Noten dargestellt ist. Bei der Überwachung der Funktionen F des in den Fign. 7 bis 10 rein beispielhaft erläuterten Kommunikationssystems 200 werden für jeden Kommunikationsknotenpunkt 201-204 jeweils eine Funktionsressourcenkennzahl für die Funktion Routing und eine Funktionsressourcenkennzahl für das Senden an die mit dem jeweiligen Knotenpunkt verbundenen weiteren Knotenpunkte ermittelt und entsprechend in ein Audiosignal umgewandelt. Rein beispielhaft ist in den in den Ansichten (B) von Fign. 7 bis 10 gezeigten Notenzeilen jeweils dargestellt, dass nacheinander für jeden Knotenpunkt 201-204 jeweils eine Tonabfolge SE1-SE4 im Audiosignal codiert wird. Somit wird eine Sequenz von Tonabfolgen SE1-SE4 entsprechend einer vorbestimmten Reihenfolge der Knotenpunkte 201-204 erzeugt. Der erste Ton der jeweiligen Abfolge SE1-SE4 repräsentiert die Funktionsressourcenkennzahl für die Funktion Routing des jeweiligen Knotenpunkts 201-204, die weiteren Töne der jeweiligen Abfolge SE1-SE4 repräsentieren die Funktionsressourcenkennzahl für das Senden von Daten von dem jeweiligen Knotenpunkt an jeweils einen weiteren Knotenpunkt. Optional kann zusätzlich ein Signalton T0 erzeugt werden, welcher den Beginn einer Sequenz repräsentiert.

Bei dem in Ansicht (A) von Fig. 7 beispielhaft dargestellten Zustand liegen die Funktionsressourcenkennzahlen alle innerhalb eines ersten Bereichs. Die zum ersten Knotenpunkt 201 gehörige Tonabfolge SE1 enthält als erste Note einen Ton einer vorbestimmten Länge und Tonhöhe, welcher die Funktionsressourcenkennzahl für das Routing repräsentiert, als zweite Note einen Ton einer vorbestimmten Länge und Tonhöhe, der die Funktionsressourcenkennzahl für das Senden von Daten vom ersten Knotenpunkt 201 an den zweiten Knotenpunkt 202 repräsentiert, als dritte Note einen Ton einer vorbestimmten Länge und Tonhöhe, der die Funktionsressourcenkennzahl für das Senden von Daten vom ersten Knotenpunkt 201 an den dritten Knotenpunkt 203 repräsentiert und als vierte Note einen Ton einer vorbestimmten Länge und Tonhöhe, der die Funktionsressourcenkennzahl für das Senden von Daten vom ersten Knotenpunkt 201 an den vierten Knotenpunkt 204 repräsentiert.

Wie in Ansicht (B) von Fig. 7 weiterhin erkennbar, enthält die zum zweiten Knotenpunkt 202 gehörige Tonabfolge SE2 als erste Note einen Ton einer vorbestimmten Länge und Tonhöhe, welcher die Funktionsressourcenkennzahl für das Routing repräsentiert, als zweite Note einen Ton einer vorbestimmten Länge und Tonhöhe, der die Funktionsressourcenkennzahl für das Senden von Daten vom zweiten Knotenpunkt 202 an den ersten Knotenpunkt 201 repräsentiert, und als dritte Note einen Ton einer vorbestimmten Länge und Tonhöhe, der die Funktionsressourcenkennzahl für das Senden von Daten vom zweiten Knotenpunkt 202 an den dritten Knotenpunkt 203 repräsentiert. Da der zweite Knotenpunkt 202 nicht mit dem vierten Knotenpunkt 204 verbunden ist, ist die vierte Note der Tonabfolge SE2 durch eine Pause ersetzt.

Analog zur ersten und zweiten Abfolge SE1, SE2 ist in Ansicht (B) von Fig. 7 dargestellt, dass die zum dritten Knotenpunkt 203 gehörige Tonabfolge SE3 als erste Note einen Ton einer vorbestimmten Länge und Tonhöhe enthält, welcher die Funktionsressourcenkennzahl für das Routing repräsentiert, als zweite Note einen Ton einer vorbestimmten Länge und Tonhöhe, der die Funktionsressourcenkennzahl für das Senden von Daten vom dritten Knotenpunkt 203 an den ersten Knotenpunkt 201 repräsentiert, und als dritte Note einen Ton einer vorbestimmten Länge und Tonhöhe, der die Funktionsressourcenkennzahl für das Senden von Daten vom dritten Knotenpunkt 203 an den zweiten Knotenpunkt 202 repräsentiert. Da der dritte Knotenpunkt 203 nicht mit dem vierten Knotenpunkt 204 verbunden ist, ist die vierte Note der Tonabfolge SE3 durch eine Pause ersetzt.

Wie in Ansicht (B) von Fig. 7 weiterhin erkennbar ist, enthält die zum vierten Knotenpunkt 204 gehörige Tonabfolge SE4 als erste Note einen Ton einer vorbestimmten Länge und Tonhöhe, welcher die Funktionsressourcenkennzahl für das Routing repräsentiert, und als zweite Note einen Ton einer vorbestimmten Länge und Tonhöhe, der die Funktionsressourcenkennzahl für das Senden von Daten vom vierten Knotenpunkt 204 an den ersten Knotenpunkt 201 repräsentiert. Da der vierte Knotenpunkt 204 weder mit dem zweiten Knotenpunkt 202 noch mit dem dritten Knotenpunkt 203 verbunden ist, sind die dritte und die vierte Note der Tonabfolge SE4 durch eine Pause ersetzt.

In Ansicht (B) von Fig. 7 sind die Noten der Tonfolgen SE1-SE4 jeweils mit gleicher Tonhöhe notiert, was in diesem Beispiel anzeigt, dass die Funktionsressourcenkennzahlen, die durch diese Töne repräsentiert sind, jeweils innerhalb des vorbestimmten ersten Bereichs liegen.

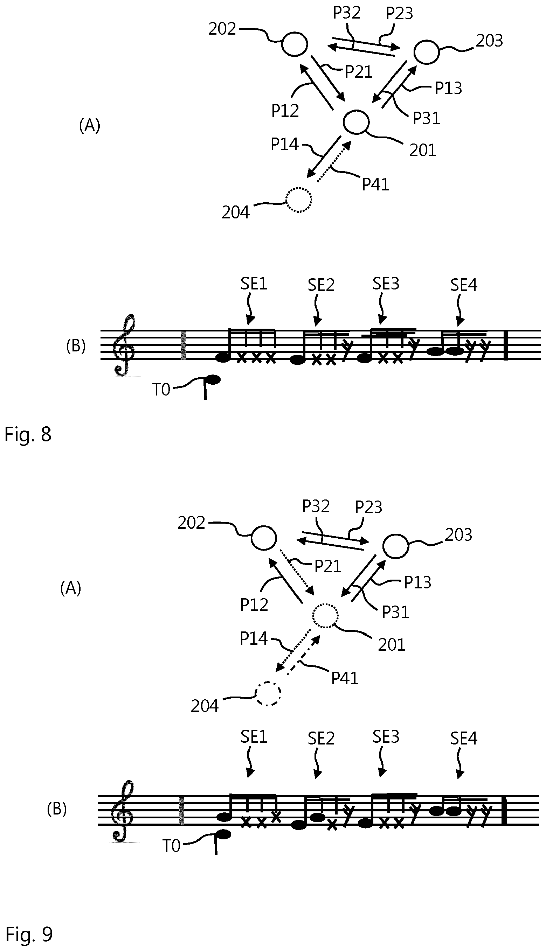

In Ansicht (A) von Fig. 8 sind der vierte Knotenpunkt 204 und der das Senden von Daten vom vierten Knotenpunkt 204 an den ersten Knotenpunkt 201 symbolisierende Pfeil P41 jeweils als gestrichelte Linien dargestellt. Dies soll symbolisieren, dass die Funktionskennzahl für das Routing von Knotenpunkt 204 in einem zweiten Bereich liegt und die Funktionskennzahl für das Senden von Daten ebenfalls in einem zweiten Bereich liegt. Beispielsweise kann die Anzahl an Datenpaketen, die durch den vierten Knotenpunkt 204 geroutet werden über einen ersten Grenzwert gestiegen sein und die Datenübertragungsrate für das Senden von Daten vom vierten an den ersten Knotenpunkt 204, 201 kann unter einen ersten Grenzwert gefallen sein. In der zum vierten Knotenpunkt 204 gehörigen Tonabfolge SE4 ist dies dadurch wahrnehmbar, dass die erste Note der Abfolge SE4, welche durch ihre Tonhöhe die Funktionsressourcenkennzahl für das Routing repräsentiert, und die zweite Note der Abfolge SE4, welche durch ihre Tonhöhe die Funktionsressourcenkennzahl für das Senden von Daten an den ersten Knotenpunkt 201 repräsentiert, in Ansicht (B) von Fig. 8 jeweils mit einem höheren Ton notiert sind als in Ansicht (B) von Fig. 7. Diese Änderung ist für einen Benutzer des Überwachungssystems 1 deutlich wahrnehmbar, wenn das Audiosignal y durch den elektroakustischen Wandler 40 umgewandelt wird.

In Ansicht (A) von Fig. 9 sind der erste Knotenpunkt 201, der das Senden von Daten vom ersten Knotenpunkt 201 an den vierten Knotenpunkt 204 symbolisierende Pfeil P14 und der das Senden von Daten vom zweiten Knotenpunkt 202 an den ersten Knotenpunkt 201 symbolisierende Pfeil P21 jeweils als gestrichelte Linien dargestellt. Dies soll symbolisieren, dass die Funktionskennzahl für das Routing des ersten Knotenpunkts 201 in einem zweiten Bereich liegt und die Funktionskennzahl für das Senden von Daten vom ersten an den vierten Knotenpunkt 201, 204 sowie für das Senden vom zweiten an den ersten Knotenpunkt 202, 201 ebenfalls in einem zweiten Bereich liegen. Beispielsweise kann die Anzahl an Datenpaketen, die durch den ersten Knotenpunkt 201 geroutet werden über einen ersten Grenzwert gestiegen sein und die Datenübertragungsrate für das Senden von Daten vom zweiten an den ersten Knotenpunkt 202, 201 und für das Senden von Daten vom ersten an den vierten Knotenpunkt 201, 204 können jeweils unter einen ersten Grenzwert gefallen sein. In Ansicht (A) von Fig. 9 sind ferner der vierte Knotenpunkt 204 und der das Senden von Daten vom vierten Knotenpunkt 204 an den ersten Knotenpunkt 201 symbolisierende Pfeil P41 jeweils als Strichpunktlinien dargestellt. Dies soll symbolisieren, dass die Funktionskennzahl für das Routing von Knotenpunkt 204 in einem dritten Bereich liegt und die Funktionskennzahl für das Senden von Daten ebenfalls in einem dritten Bereich liegt. Beispielsweise kann die Anzahl an Datenpaketen, die durch den vierten Knotenpunkt 204 geroutet werden über einen zweiten Grenzwert gestiegen sein, der höher ist als der erste Grenzwert hierfür, und die Datenübertragungsrate für das Senden von Daten vom vierten an den ersten Knotenpunkt 204, 201 kann unter einen zweiten Grenzwert gefallen sein, der kleiner als der erste Grenzwert hierfür ist.

Diese im Vergleich zu Ansicht (B) von Fig. 8 geänderte Situation ist in der in Ansicht (B) von Fig. 9 beispielhaft dargestellten Sequenz der Tonabfolgen SE1-SE4 wie folgt erkennbar:
- In der zum ersten Knotenpunkt 201 gehörigen Tonabfolge SE1 sind die erste Note der Abfolge SE1, welche durch ihre Tonhöhe die Funktionsressourcenkennzahl für das Routing repräsentiert, und die vierte Note der Abfolge SE1, welche durch ihre Tonhöhe die Funktionsressourcenkennzahl für das Senden von Daten vom ersten Knotenpunkt 201 an den vierten Knotenpunkt 204 repräsentiert, in Ansicht (B) von Fig. 9 jeweils mit einem höheren Ton notiert als in den Ansichten (B) von Fign. 7 und 8;
- In der zum zweiten Knotenpunkt 202 gehörigen Tonabfolge SE2 ist die zweite Note, welche durch ihre Tonhöhe die Funktionsressourcenkennzahl für das Senden von Daten vom zweiten Knotenpunkt 202 an den ersten Knotenpunkt 201 repräsentiert, in Ansicht (B) von Fig. 9 jeweils mit einem höheren Ton notiert als in den Ansichten (B) von Fign. 7 und 8;
- In der zum vierten Knotenpunkt 204 gehörigen Tonabfolge SE4 sind die erste Note der Abfolge SE4, welche durch ihre Tonhöhe die Funktionsressourcenkennzahl für das Routing repräsentiert, und die zweite Note der Abfolge SE4, welche durch ihre Tonhöhe die Funktionsressourcenkennzahl für das Senden von Daten an den ersten Knotenpunkt 201 repräsentiert, in Ansicht (B) von Fig. 9 jeweils mit einem höheren Ton notiert als in Ansicht (B) von Fig. 8.

Diese Änderungen sind für einen Benutzer des Überwachungssystems 1 deutlich wahrnehmbar, wenn das Audiosignal y durch den elektroakustischen Wandler 40 umgewandelt wird.

In Ansicht (A) von Fig. 10 ist im Vergleich zu Ansicht (A) von Fig. 9 erkennbar, dass die Pfeile P23 und P32, welche das Senden von Daten vom zweiten an den dritten Knotenpunkt 202, 203 und vom dritten an den zweiten Knotenpunkt 203, 202 symbolisieren, und die Pfeile P13 und P31, welche das Senden von Daten vom ersten an den dritten Knotenpunkt 201, 203 und vom dritten an den ersten Knotenpunkt 203, 201 symbolisieren, durch Linien L13, L23 ersetzt sind. Dies soll symbolisieren, dass zwischen dem ersten und dem dritten Knotenpunkt 201, 203 und zwischen dem zweiten und dem dritten Knotenpunkt 202, 203 kein Datenaustausch mehr stattfindet. Der dritte Knotenpunkt 203 routet somit keine Daten mehr noch sendet dieser Daten an oder empfängt Daten von dem ersten und dem zweiten Knotenpunkt 201, 202. In der zum dritten Knotenpunkt 203 gehörigen Tonabfolge SE3 ist dies dadurch wahrnehmbar, dass die erste Note der Abfolge SE3, welche durch ihre Tonhöhe die Funktionsressourcenkennzahl für das Routing repräsentiert, die zweite Note der Abfolge SE3, welche durch ihre Tonhöhe die Funktionsressourcenkennzahl für das Senden von Daten an den ersten Knotenpunkt 201 repräsentiert, und die dritte Note der Abfolge SE3, welche durch ihre Tonhöhe die Funktionsressourcenkennzahl für das Senden von Daten an den zweiten Knotenpunkt 202 repräsentiert, in Ansicht (B) von Fig. 10 jeweils mit einem höheren Ton notiert sind als in den Ansichten (B) von Fign. 7, 8 und 9 dargestellt und dieser Ton höher ist als die Töne der zum vierten Knotenpunkt 204 gehörigen Tonabfolge SE4. Durch diese hohen Töne in der zum dritten Knotenpunkt 203 gehörigen Tonabfolge SE3 wird somit akustisch deutlich die fehlende Funktionsfähigkeit des dritten Knotenpunkts 203 herausgehoben.

Allgemein kann demnach zum Beispiel vorgesehen sein, dass sich eine Tonhöhe kontinuierlich mit der Funktionsressourcenkennzahl ändert. Selbstverständlich können sich auch andere akustische Parameter kontinuierlich abhängig von der Funktionsressourcenkennzahl ändern.

In Fig. 12 ist schematisch ein Ablaufdiagramm eines Verfahrens zur Überwachung von Funktionen F eines Systems S dargestellt. Dieses Verfahren kann beispielsweise mithilfe eines Überwachungssystems 1, wie es voranstehend beschrieben wurde durchgeführt werden. In einem ersten Schritt M1 erfolgt ein Ermitteln M1 von Funktionsinformationen für zumindest eine Funktion F des überwachten Systems S für einen aktuellen Zeitschritt. Wie voranstehend bereits allgemein und anhand der Beispiele des Radarsystems 100 in Fig. 2 und des Kommunikationssystems in Fig. 7 beschrieben, können die Funktionsinformationen eine oder mehrere der folgenden Informationen beinhalten: einen Ausführungsstatus der Funktion F, eine Funktionsressourcenkennzahl, welche eine Auslastung einer vom System bereitgestellten Ressource durch die jeweilige Funktion repräsentiert, eine Systemressourcenkennzahl F, welche einen Anteil der Funktion an der Auslastung des Systems S repräsentiert. In einem weiteren Schritt M2 wird ein Systemzustandsdatensatz x für den jeweiligen Zeitschritt erzeugt. Der Systemzustandsdatensatz x enthält die Funktionsinformationen der zumindest einen Funktion F als Dateninhalte, wie dies bereits mit Bezugnahme auf Fig. 10 erläutert wurde. Die Schritte M1 und M2 können beispielsweise mithilfe des Überwachungsmoduls 10 durchgeführt werden. In einem weiteren Schritt M3 erfolgt ein Ermitteln akustischer Parameter gemäß einer vorbestimmten Zuordnung von akustischen Parametern zu den Dateninhalten des Systemzustandsdatensatzes x, z. B. mithilfe der Verarbeitungseinheit 23 des Sonifikationsmoduls 20, wie unter Bezugnahme auf Fig. 10 beispielhaft beschrieben. Abschließend wird in einem Schritt M4 ein die akustischen Parameter repräsentierendes Audiosignal y für den jeweiligen Zeitschritt erzeugt, z. B. ebenfalls mithilfe der Verarbeitungseinheit 23 des Sonifikationsmoduls 20. Das Audiosignal y kann mithilfe eines elektroakustischen Wandlers 30 in eine für einen menschlichen Benutzer wahrnehmbare Ausgabe umgewandelt werden. Da für jeden Zeitschritt, also kontinuierlich ein Systemzustandsdatensatz x erzeugt und, wie beschrieben, sonifiziert wird, werden dem Benutzer kontinuierlich Informationen über die Funktionen F des überwachten System S in Form von Klängen geliefert. Damit wird vorteilhaft die Fähigkeit des menschlichen Gehörs in die Überwachung von Systemfunktionen eingebunden. Im Unterschied zu klassischen Alarmen oder anderen rein binären akustischen Zustandsdarstellungen bietet die nach Zeitschritten aufgelöste, kontinuierliche Überwachung, bei der zusätzlich die Funktionsinformationen gemäß einer vorbestimmten, systematischfunktionalen Zuordnung stetig vertont werden, den Vorteil, dass ein komplexes akustisches Bild der Funktionen des überwachten Systems entsteht. Dies ermöglicht es dem menschlichen Benutzer auf einfache, intuitive Weise ein komplexes System zu überwachen.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Überwachungssystem

- 10: Überwachungsmodul
- 11: Systemschnittstelle
- 12: Übergabeschnittstelle
- 20: Sonifikationsmodul
- 21: Eingangsschnittstelle
- 22: Ausgangsschnittstelle
- 23: Verarbeitungseinheit
- 24: Steuerschnittstelle
- 30: Bedieneinrichtung
- 31: Eingabeeinrichtung
- 32: Sensoreinrichtung
- 40: elektroakustischer Wandler
- 41: Mikrophon

- 100: Radarsystem
- 101: Radartransceiver
- 102: Radarantenne

- 200: Kommunikationssystem
- 201-204: Kommunikationsknotenpunkte

- RB: Radarstrahl
- BS: Blanking Sektor
- C: Steuerbefehl
- F: Funktionen
- F11: Basissuche
- F12: Grobsuche
- F13: Feinsuche
- F14: Zielverfolgung
- K: Systemkomponenten
- L13, L32: Linien
- M1-M4: Verfahrensschritte
- P12: Pfeil
- P13: Pfeil
- P14: Pfeil
- P21: Pfeil
- P23: Pfeil
- P31: Pfeil
- P32: Pfeil
- P41: Pfeil
- S: System
- SE1-SE4: Tonabfolge
- x: Systemzustandsdatensatz
- y: Audiosignal
- Ψ: Azimut
- α: Elevation

## Patentansprüche

1. Verfahren zur Überwachung von Funktionen (F) eines Systems (S) mit folgenden Schritten:
Ermitteln (M1) von Funktionsinformationen für zumindest eine Funktion (F) des Systems (S) für einen aktuellen Zeitschritt, wobei die Funktionsinformationen eine oder mehrere der folgenden Informationen beinhalten: einen Ausführungsstatus der Funktion (F), eine Funktionsressourcenkennzahl, welche eine Auslastung einer vom System bereitgestellten Ressource durch die jeweilige Funktion repräsentiert, eine Systemressourcenkennzahl (F), welche einen Anteil der Funktion an der Auslastung des Systems (S) repräsentiert;
Erzeugen (M2), eines Systemzustandsdatensatzes (x) für den jeweiligen Zeitschritt, welcher die Funktionsinformationen der zumindest einen Funktion (F) als Dateninhalte aufweist;
Ermitteln (M3) akustischer Parameter gemäß einer vorbestimmten Zuordnung von akustischen Parametern zu den Dateninhalten des Systemzustandsdatensatzes (x); und
Erzeugen (M4) eines die akustischen Parameter repräsentierenden Audiosignals (y) für den jeweiligen Zeitschritt.

2. Verfahren nach Anspruch 1, wobei das System (S) eine oder mehrere der folgenden Systemkomponenten (K) aufweist, welche jeweils eine oder mehrere Funktionen (F) ausführen:
ein Sensor, welcher eine physikalische Größe misst, ein Transceiver, welcher elektrische, optische oder elektromagnetische Signale sendet und empfängt, ein Aktuator, welcher eine weitere Komponente des Systems oder ein Arbeitsmedium mechanisch mit einer Kraft beaufschlagt, ein Datennetzwerk, welches Daten zwischen verschiedenen Komponenten des Systems überträgt, ein Prozessor, welcher eingehende elektrische Signale verarbeitet und verarbeitete Signale als Ausgabewerte ausgibt.

3. Verfahren nach Anspruch 1 oder 2, wobei das System (S) ein Radarsystem (100) aufweist, welches innerhalb eines vorbestimmten Zeitfensters eine oder mehrere der folgenden Funktionen ausführt: eine Basissuche zur Detektion neuer Objekte, Grobsuche zur Klassifizierung von Objekten, eine Feinsuche zur Erkennung von Objekten in einem vorbestimmten räumlichen Bereich, eine Zielverfolgung eines erkannten Objekts;
wobei als Funktionsinformationen für jede der Funktionen der Ausführungsstatus und/oder die Systemressourcenkennzahl ermittelt werden, wobei die Systemressourcenkennzahl durch einen Zeitanteil an dem Zeitfenster definiert ist, für welchen die jeweilige Funktion während des Zeitfensters ausgeführt wird.

4. Verfahren nach einem der voranstehenden Ansprüche, wobei das System (S) ein Kommunikationssystem (200) mit zumindest zwei Kommunikationsknotenpunkten (201, 202, 203, 204) aufweist, wobei die Kommunikationsknotenpunkte zumindest folgende Funktionen ausführen:
ein Senden und Empfangen von Kommunikationsdaten an/von einen/m weiteren Kommunikationsknotenpunkt (201, 202, 203, 204), ein Routing von empfangenen Kommunikationsdaten an einen weiteren Kommunikationsknotenpunkt;
wobei als Funktionsinformationen die Funktionsressourcenkennzahl für jede der Funktionen ermittelt wird.

5. Verfahren nach Anspruch 4, wobei die Funktionsressourcenkennzahl für das Senden und Empfangen von Kommunikationsdaten durch eine oder mehrere der folgenden Kennzahlen definiert ist: eine Datenübertragungsrate, eine Datensendezeit, eine Sendewartezeit, ein Signal-Rausch-Verhältnis, ein MCS-Index, ein UDP Datendurchsatz oder dergleichen.

6. Verfahren nach Anspruch 4 oder 5, wobei die Funktionsressourcenzahl für das Routing durch eine Anzahl an Datenpaketen pro Zeiteinheit definiert ist, die durch den jeweiligen Kommunikationsknotenpunkt geleitet werden.

7. Verfahren nach einem der voranstehenden Ansprüche, wobei die akustischen Parameter einen oder mehrere der folgenden Parameter umfassen:
Tonhöhe, Klangfarbe, Rhythmus, Lautstärke, Akkord, Modulation, Staccato oder dergleichen.

8. Überwachungssystem (1) zur Überwachung von Funktionen (F) eines Systems (S), mit:
einem Überwachungsmodul (10) mit einer Systemschnittstelle (11) zum Anschluss an das zu überwachende System (S), wobei das Überwachungsmodul (10) dazu eingerichtet ist, für einen aktuellen Zeitschritt Funktionsinformationen für zumindest eine Funktion (F) des Systems (S) zu ermitteln und einen Systemzustandsdatensatz (x) zu erzeugen, welcher die Funktionsinformationen für zumindest eine Funktion (F) des Systems zu einem jeweiligen Zeitschritt als Dateninhalt enthält, wobei die Funktionsinformationen eine oder mehrere der folgenden Informationen beinhalten: einen Ausführungsstatus der Funktion (F), eine Funktionsressourcenkennzahl, welche eine Auslastung einer vom System bereitgestellten Ressource durch die jeweilige Funktion repräsentiert, eine Systemressourcenkennzahl, welche einen Anteil der Funktion an der Auslastung des Systems (S) repräsentiert; und
einem Sonifikationsmodul (20), welches aufweist:
eine mit dem Überwachungsmodul (10) verbundene Eingangsschnittstelle (21) zum Empfang des Systemzustandsdatensatzes (x),
eine Ausgangsschnittstelle (22),
eine Verarbeitungseinheit (23), welche dazu eingerichtet ist, akustische Parameter gemäß einer vorbestimmten Zuordnung von akustischen Parametern zu den Dateninhalten des Systemzustandsdatensatzes (x) zu ermitteln, ein die akustischen Parameter repräsentierendes Audiosignals (y) zu erzeugen und an der Ausgangsschnittstelle (22) auszugeben.

9. Überwachungssystem (1) nach Anspruch 8, zusätzlich aufweisend:
eine mit einer Steuerschnittstelle (24) des Sonifikationsmoduls (20) verbundene Bedieneinrichtung (30), welche dazu eingerichtet ist, basierend auf einer Benutzereingabe einen Steuerbefehl (C) zu erzeugen, wobei das Sonifikationsmodul (10) dazu eingerichtet ist, die Erzeugung des Audiosignals (y) gemäß dem Steuerbefehl (C) anzupassen.

10. Überwachungssystem (1) nach Anspruch 9, wobei die Bedieneinrichtung (30) eine Sensoreinrichtung (32) zum Erfassen von Bewegungen des Benutzers und/oder sprachlichen Äußerungen eines Benutzers als Benutzereingabe aufweist und dazu eingerichtet ist, den Steuerbefehl (C) basierend auf der erfassten Bewegung und/oder auf der erfassten Äußerung zu erzeugen.

11. Überwachungssystem (1) nach Anspruch 9 oder 10, wobei das Sonifikationsmodul (20) dazu eingerichtet ist, basierend auf dem Steuerbefehl (C) die Zuordnung von akustischen Parametern zu den Dateninhalten des Systemzustandsdatensatzes (x) zu ändern.

12. Überwachungssystem (1) nach einem der Ansprüche 9 bis 11, wobei das Überwachungsmodul (10) dazu eingerichtet ist, für einen aktuellen Zeitschritt Funktionsinformationen für eine Vielzahl von Funktionen (F) des Systems (S) zu ermitteln und einen Systemzustandsdatensatz (x) zu erzeugen, welcher die Funktionsinformationen für die Vielzahl von Funktion (F) des Systems zu einem jeweiligen Zeitschritt enthält,
wobei der Steuerbefehl (C) Steuerdaten enthält, welche eine Funktionsauswahl bestehend aus zumindest einer Funktion (F) aus der Vielzahl von Funktion (F) enthalten, und
wobei das Sonifikationsmodul (20) dazu eingerichtet ist, basierend auf den Steuerdaten aus dem Systemzustandsdatensatz (x) Funktionsinformationen für die Funktionsauswahl auszuwählen und das Audiosignal nur für die Funktionsinformationen der ausgewählten Funktionsinformationen zu erzeugen.
